# EUROPÄISCHE PATENTSCHRIFT

(11) **EP 3 411 858 B1**
(45) Veröffentlichungstag und Bekanntmachung des Hinweises auf die Patenterteilung: **11.12.2019**
(21) Anmeldenummer: 17709398.6
(22) Anmeldetag: 01.03.2017
(51) Int. Cl.: G07C 13/00, H04L 9/30, H04L 9/32

(54) **VERFAHREN ZUM VOTING MIT VERKETTETEN SIGNATUREN**
METHOD FOR VOTING USING CONCATENATED SIGNATURES
PROCÉDÉ DE VOTE AVEC DES SIGNATURES CONCATÉNÉES

(30) Priorität: 29.03.2016 DE 102016205121
(43) Veröffentlichungstag der Anmeldung: 12.12.2018
(73) Patentinhaber: Siemens Mobility GmbH, 81739 München (DE)
(72) Erfinder: GERKEN, Stefan, 38116 Braunschweig (DE); ECKELMANN-WENDT, Uwe, 38302 Wolfenbüttel (DE)
(86) Internationale Anmeldenummer: PCT/EP2017/054745
(87) Internationale Veröffentlichungsnummer: WO 2017/167526

(56) Entgegenhaltungen:
- WO-A2-01/73694
- DE-A1- 10 301 674
- FR-A1- 2 926 911
- US-A1- 2013 191 642

## Beschreibung

Die Erfindung betrifft ein Verfahren zum Voting mit verketteten Signaturen sowie eine Vorrichtung zum Ausführen des Verfahrens.

Sicherheitstechnische Daten müssen mehrfach redundant identisch berechnet worden sein, wobei jede Berechnungsart auch als Kanal oder Replikant bezeichnet wird, oder zumindest redundant geprüft worden sein, um als signaltechnisch sicher zu gelten. Dies gilt für alle Sicherheitsstufen gemäß einschlägiger Normen (z.B. IEC61508, CENELEC EN50129). Aus der mehrfachen Berechnung eines Datums wird durch Voting eine signaltechnisch sichere Nachricht. Beim Voting werden von einem Voter mehrere eingehende Daten bzw. Nachrichten miteinander verglichen und ein "richtiges" Datum ausgegeben. Ein Voter kann beispielsweise einen Mehrheitsentscheid durchführen, d.h. wenn eine Mehrheit von Eingängen eines Voters eine bestimmte Nachricht anzeigt, dann wird diese Nachricht ausgegeben. Bisher wurde für das Voting ein spezielles signaltechnisch sicheres Gerät oder eine signaltechnisch sichere Komponente verwendet. Es wäre jedoch günstiger für das Gesamtsystem, wenn die Voter auch auf einem signaltechnisch nicht sicheren Gerät ausgeführt werden können, idealerweise auf dem selben Gerät wie die gevoteten Nachrichten. Bislang hat man zumindest in den höheren Sicherheitsniveaus jedoch ausschließlich proprietäre Hardware für Voter verwendet, die nicht allgemeinen Standards entsprechen. Kommerzielle nicht signaltechnisch sichere Hardware konnte bisher nicht eingesetzt werden.

Die FR 2 926 911 A1 offenbart eine zertifizierte elektronische Abstimmungsmethode für die Überprüfung der Zählung der elektronischen Abstimmung in der Wahlstation und beinhaltet die Veröffentlichung von anonymen Zertifikaten durch öffentliche Anzeige der Abstimmungsliste nach Umfrage für die Wahlstation, wobei jede Zeile der Liste ein Zertifikat hat. Die Methode beinhaltet die anonyme Identifizierung einer Abstimmung durch die Erstellung und Vorlage eines zufälligen Codes an einen Wähler vor der Abstimmung. Eine digitale Signatur der Abstimmung wird durch Verschlüsselung mit Hilfe eines privaten Signaturschlüssels durch Chapping einer Charakterkette erhalten, die durch den Code und die Abstimmung gebildet wird. Die Bescheinigung über die Abstimmung erfolgt durch Einreichung einer Stimmabgabe an den Wähler nach der Abstimmung. Anonyme Zertifikate werden durch öffentliche Anzeige einer Liste von Stimmen nach Abfrage für eine Wahlstation veröffentlicht, wobei jede Zeile der Liste das Zertifikat enthält.

Die Aufgabe der Erfindung besteht darin, ein Verfahren zum Voting von Nachrichten zu entwickeln, das hohen Sicherheitsanforderungen gerecht wird und auf kommerzieller Hardware ausgeführt werden kann.

Das erfindungsgemäße Verfahren zum Voting mit verketteten Signaturen umfasst grundsätzlich folgende Schritte: In einem Schritt a) wird eine Mehrzahl M von Replikanten zur Erzeugung von M redundanten Nachrichten bereitgestellt, wobei M≥2. In einem Schritt b) wird eine Mehrzahl N von Votermodulen mit N≥2 bereitgestellt, wobei jedes Votermodul einen Voter zum Voting der redundanten Nachrichten sowie eine Kryptoeinheit mit privatem Teilschlüssel zum Signieren einer Nachricht aufweist. In einem Schritt c) werden die redundanten Nachrichten der Replikanten an jedes Votermodul übergeben, so dass der Voter jedes Votermoduls eine gevotete Nachricht auf Basis der redundanten Nachrichten erzeugt. In einem weiteren Schritt d) wird eine 1-te Signatur der 1-ten gevoteten Nachricht durch das 1-te Votermodul mit einem 1-ten privaten Teilschlüssel erstellt, falls der 1-te Voter eine 1-te gevotete Nachricht erzeugt. In einem weiteren Schritt e) wird eine n-te Signatur und eine n-te gevoteten Nachricht von dem n-ten Votermodul an das (n+1)-te Votermodul übergeben. In einem weiteren Schritt f) wird die von dem (n+1)-ten Voter gevotete Nachricht mit der n-ten gevoteten Nachricht verglichen und eine (n+1)-te Signatur auf der n-ten Signatur mit einem (n+1)-ten privaten Teilschlüssel des (n+1)-ten Votermodul erstellt, falls die n-te gevotete Nachricht mit der (n+1)-ten gevoteten Nachricht übereinstimmt. In einem weiteren Schritt g) werden die Schritte e) und f) in aufsteigender Reihenfolge für jedes n mit 1≤n≤(N-1) durchgeführt. In einem weiteren Schritt h) wird die N-te Signatur und die N-te gevotete Nachricht an eine Empfängereinheit übergeben. In einem weiteren Schritt i) wird die N-te gevotete Nachricht durch eine Empfängerkryptoeinheit akzeptiert, falls die Empfängerkryptoeinheit die N-te Signatur mit einem öffentlichen Schlüssel erfolgreich prüft.

Durch das erfindungsgemäße Verfahren wird das Prinzip des Votings mit kryptographischen Methoden kombiniert. Voraussetzung ist dabei immer, dass ein Voting einer Stufe erfolgreich ist und mit dem Votingresultat der Vorstufe übereinstimmt. Ohne diese Voraussetzung wird keine Teilsignatur durch einen Teilschlüssel erfolgen. Nur wenn aber alle Signaturen vorliegen, dann "passt" der öffentliche Schlüssel zu der durch die Teilschlüssel erzeugten Signatur und die gevotete Nachricht wird dann von der Empfängereinheit akzeptiert. Eine Empfängereinheit ist in anderen Worten eine Verifiziereinheit, ein Verifiziergerät oder ein Empfänger. Durch das Konzept des verketteten Signierens wird eine hohe Sicherheit für die gevotete Nachricht erzeugt. Die Erfindung hat ferner den Vorteil, dass das Verfahren auf signaltechnisch nicht sicherer Hardware wie beispielsweise auf handelsüblichen PCs ausgeführt werden kann.

Bevorzugt sind alle privaten Teilschlüssel voneinander verschieden.

Die Signaturen werden bevorzugt auf einem Hashwert der Nachricht gebildet. Dadurch wird das Datenvolumen von längeren Nachrichten vorteilhaft reduziert und der Prozess des verketten Signierens kann schneller ablaufen.

Bevorzugt ergibt sich ein privater Schlüssel durch Multiplikation der privaten Teilschlüssel in der Restlasse und der öffentliche Schlüssel multipliziert mit dem sich ergebenen privaten Schlüssel ergibt in der Restklasse 1, wobei dadurch wieder der originale Hashwert oder die originale Nachricht erhalten wird. Dies ist eine bevorzugte und besonders schnell ablaufende Realisierung der Signatur. Der originale Hashwert bzw. die originale Nachricht kann dann von der Empfängereinheit geprüft werden.

Bevorzugt ist der private Schlüssel kommutativ aus den privaten Teilschlüsseln berechenbar. Mit anderen Worten bedeutet das, dass es auf die Reihenfolge des Signierens nicht ankommt. Somit ist die Sequenz der verifizierenden Votermodule irrelevant, solange alle Votermodule beteiligt sind.

Vorteilhafterweise ist das Übergeben der gevoteten Nachricht des n-ten Votermoduls an das (n+1)-te Votermodul mit dem Übergeben der redundanten Nachrichten der Mehrzahl der Replikanten (R1,R2,RM) an das (n+1)-te Votermodul zeitlich abgestimmt, wobei 1≤n≤(N-1). Dadurch wird die zeitliche Verzögerung des verketteten Signierens verringert.

Bevorzugt ist jeder Voter von den anderen Votern separiert. Das meint, dass man die gleichen Techniken anwendet, wie man Replikanten segregiert, oder in anderen Worten kapselt bzw. isoliert. Dadurch wird die Unabhängigkeit der Berechnungspfade erreicht. Eine geeignete Kapselung der Votermodule kann beispielsweise durch gefärbte Emulatoren für SIL3 oder SIL4 erzielt werden, wobei SIL das Sicherheits-Integritätslevel bezeichnet. Dies ist ferner von Vorteil, wenn man das Verfahren auf handelsüblichen PCs realisieren möchte.

Die Voter können als Diskriminatorvoter oder als Majoritätsvoter ausgeführt sein. Diskriminatorvoter geben eine gevotete Nachricht nur aus, falls alle Eingänge übereinstimmen. Majoritätsvoter bilden einen Mehrheitsentscheid, d.h. wenn eine Mehrheit der Nachrichten eine Übereinstimmung aufweist, dann wird diese Nachricht ausgegeben

Ein Voter gibt bevorzugt keine Nachricht aus oder eine Negativnachricht, falls er keine gevotete Nachricht bilden kann.

Bevorzugt läuft das Übergeben der gevoteten Nachrichten vom n-ten Votermodul zum (n+1)-ten Votermodul ohne Unterbrechung ab, wobei 1≤n≤(N-1). Dadurch wird die Dauer des Signierens verringert.

Vorteilhafterweise kann jede redundante Nachricht des jeweiligen Replikanten sicherungstechnisch identifiziert werden. Dies kann beispielsweise durch eine Checksumme mit Replikantenidentifikation erfolgen.

Es wird ferner eine Vorrichtung zur Durchführung des Verfahrens zum Voting mit verketteten Signaturen vorgeschlagen. Die Vorrichtung umfasst eine Mehrzahl M von Replikanten zur Erzeugung von M redundanten Nachrichten mit M≥2. Ferner wird eine Mehrzahl N von Votermodulen mit N≥2 bereitgestellt, wobei jedes Votermodul einen Voter zum Voting der redundanten Nachrichten sowie einen privaten Teilschlüssel zum Signieren einer Nachricht aufweist, wobei die Eingänge jedes Voters mit den Ausgängen jedes Replikanten verbunden sind. Der Ausgang jedes n-ten Votermoduls ist mit dem Eingang jedes (n+1)-ten Votermoduls zur Übertragung von gevoteten Nachrichten und Signaturen verbunden, wobei 1≤n≤(N-1), und es ist eine Empfängereinheit vorgesehen, die die vom N-ten Votermodul ausgegebene Signatur und gevotete Nachricht empfängt und die N-te Signatur mit einem öffentlichen Schlüssel prüft.

Es wird ferner ein Computerprogramm vorgeschlagen, das es einer Datenverarbeitungseinrichtung ermöglicht, nachdem es in Speichermittel der Datenverarbeitungseinrichtung geladen worden ist, ein Verfahren zum Voting mit verketteten Signaturen durchzuführen.

Ferner wird ein computerlesbares Speichermedium vorgeschlagen, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Voting mit verketteten Signaturen durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 eine Darstellung des Verfahrens zum Voting mit verketteten Signaturen nach einer beispielhaften Ausführungsform, und
Figur 2 eine Darstellung einer Vorrichtung zum Voting mit verketteten Signaturen nach einer beispielhaften Ausführungsform.

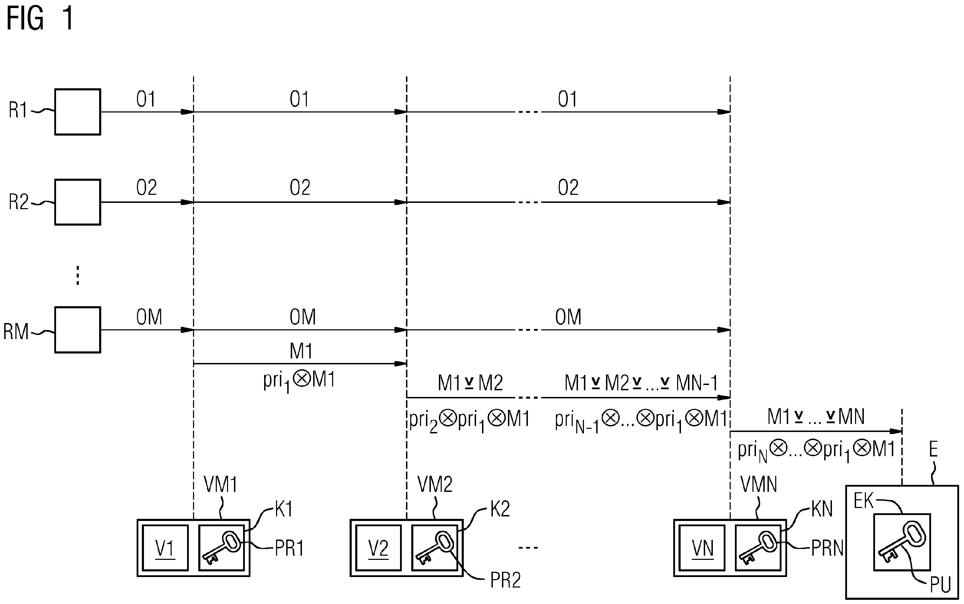

In der Figur 1 ist ein Verfahren zum Voting mit verketteten Signaturen nach einer bespielhaften Ausführung gezeigt. Bereitgestellt sind jeweils eine Mehrzahl M von Replikanten R1,R2,RM zur Erzeugung von M redundanten Nachrichten O1,O2,OM, wobei M≥2. Diese redundanten Nachrichten O1,O2,OM sind inhaltlich äquivalent (von der Bedeutung her identisch). Zudem wird eine Mehrzahl N von Votermodulen VM1,VM2,VMN bereitgestellt, wobei jedes Votermodul VM1,VM2,VMN einen Voter V1,V2,VN zum Voting der redundanten Nachrichten O1,O2,OM sowie eine Kryptoeinheit K1,K2,KN mit privatem Teilschlüssel PR1,PR2,PRN zum Signieren einer Nachricht aufweist.

Die redundanten Nachrichten O1,O2,OM der Replikanten R1,R2,RM werden an jedes Votermodul VM1,VM2,VM3 übergeben, so dass der Voter V1,V2,VN jedes Votermoduls VM1,VM2,VMN eine gevotete Nachricht auf Basis der redundanten Nachrichten erzeugt. In der Figur 1 ist das beispielhaft graphisch durch vertikale, gestrichelte Linien an jedem Votermodul VM1,VM2,VMN angedeutet, auf die jeweils die redundanten Nachrichten O1,O2,OM mittels dargestellter Pfeile zeigen.

Es wird dann eine 1-te Signatur der 1-ten gevoteten Nachricht M1 durch das 1-te Votermodul VM1 mit einem 1-ten privaten Teilschlüssel PR1 erstellt, falls der 1-te Voter V1 eine 1-te gevotete Nachricht M1 erzeugt. Die 1-te Signatur wird hierbei durch den Schlüsseloperator bzw. Schlüsselwert pri₁ des 1-ten privaten Teilschlüssels PR1 angewendet auf die gevotete Nachricht M1 oder alternativ auf einem Hashwert der Nachricht, was in der Figur mit pri₁⊗M1 dargestellt wird. Diese 1-te Signatur wird dann mit der 1-ten gevoteten Nachricht M1 an das 2-te Votermodul VM2 übergeben. In diesem 2-ten Votermodul VM2 wird nun eine 2-te gevotete Nachricht M2 durch den 2-ten Voter V2 auf Basis der redundanten Nachrichten O1,O2,OM der Replikanten R1,R2,RM erstellt. Diese 2-te gevotete Nachricht wird mit der 1-ten gevoteten Nachricht M1 verglichen. Bei Übereinstimmung wird dann eine 2-te Signatur mittels eines 2-ten privaten Teilschlüssel PR2 auf die 1-te Signatur erstellt, was durch pri₂⊗pri₁⊗M1 mit der Operation ⊗ dargestellt ist. Diese 2-te Signatur wird dann übergeben mit entweder der 1-ten gevoteten Nachricht M1 oder 2-ten gevoteten Nachricht M2. Da beide gevotete Nachrichten M1,M2 als Voraussetzung für das Signieren übereinstimmen müssen, ist es unerheblich, welche von beiden weitergeleitet wird. Das wird in der Figur 1 durch das ausschließende logische Kontravalenz-Symbol V dargestellt, was einem "entweder oder" entspricht. Beispielsweise kann die 1-te gevotete Nachricht M1 zum Übergeben verwendet werden.

Dieses Verfahren wird nun in dieser Form für die weiteren Votermodule VM1,VM2,VMN weitergeführt. Allgemeiner lässt sich daher formulieren, dass eine n-te Signatur und eine n-te gevotete Nachricht von dem n-ten Votermodul an das (n+1)-te Votermodul übergeben wird. Dann wird die von dem (n+1)-ten Voter gevotete Nachricht mit der n-ten gevoteten Nachricht verglichen und eine (n+1)-te Signatur auf der n-ten Signatur mit einem (n+1)-ten privaten Teilschlüssel des (n+1)-ten Votermoduls erstellt, falls die n-te gevotete Nachricht mit der (n+1)-ten gevoteten Nachricht übereinstimmt. Dies wird in aufsteigender Reihenfolge für jedes n mit 1≤n≤(N-1) durchgeführt.

Im letzten Schritt wird somit eine N-te Signatur durch den N-ten privaten Teilschlüssel PRN auf die (N-1)-te Signatur erstellt, was in der Figur 1 durch pri_{N}⊗...⊗pri₁⊗M1 mit der Operation ⊗ dargestellt ist.

Danach wird die N-te Signatur und die N-te gevotete Nachricht MN (oder auch eine andere übereinstimmende gevotete Nachricht) an eine Empfängereinheit E übergeben. Dabei wird die N-te gevotete Nachricht MN durch eine Empfängerkryptoeinheit EK akzeptiert, falls die Empfängerkryptoeinheit EK die N-te Signatur mit einem öffentlichen Schlüssel PU erfolgreich prüft.

Dieses Verfahren kann im Folgenden mathematisch beschrieben werden. Ein privater Schlüssel PR, im Folgenden mit pri bezeichnet, ergibt sich als Verknüpfung der privaten Teilschlüssel PR1,PR2,PRN, mit priₙ bezeichnet mit 1≤n≤N, mittels einer Operation ⊗, so dass pri_{N}⊗...⊗pri₁≡pri mod a^{l}. Anders formuliert ist der private Schlüssel PR nicht prim, da er sich als Verknüpfung mehrerer Teilschlüssel P1,P2,PN darstellen lässt. Der private Schlüssel PR ergibt dann mit dem öffentlichen Schlüssel PU, hier als pub bezeichnet, durch Verknüpfung das neutrale Element 1 in der Restklasse, also pri⊗ pub≡1 mod a^{l}, wobei a die Anzahl der möglichen Werte pro Zeichen, l die zu Grunde liegende Zeichenlänge, a^{l} die Anzahl der voneinander verschiedenen Schlüssel und ≡ die Kongruenz repräsentiert. Der private Schlüssel PR und der öffentliche Schlüssel sind demnach modular invers zueinander bzgl. der Verknüpfung ⊗. Typischerweise arbeiten Prozessoren im binären System, was also a=2 entspricht und die bevorzugte Variante ist. Typischerweise liegt die Bitlänge l bei 128 bis 160 bit, jedoch können kürzere oder längere Bitlängen und somit kürzere und längere Schlüssel verwendet werden.

Wenn nun eine Signatur eines privaten Teilschlüssels PR1,PR2,PRN fehlen würde, dann würde es der Empfängereinheit E nicht gelingen die ursprüngliche Nachricht zurückzugewinnen. Durch das Konzept des verketteten Signierens wird eine hohe Sicherheit für die gevotete Nachricht erzeugt. Das Verfahren kann auf signaltechnisch nicht sicherer Hardware wie beispielsweise auf handelsüblichen PCs auszuführen. Durch das erfindungsgemäße Verfahren wird das Prinzip des Votings mit kryptographischen Methoden kombiniert. Voraussetzung ist dabei immer, dass ein Voting einer Stufe erfolgreich ist und mit dem Votingresultat der Vorstufe übereinstimmt. Ohne diese Voraussetzung wird keine Teilsignatur durch einen Teilschlüssel erfolgen. Nur wenn aber alle Signaturen vorliegen, dann "passt" der öffentliche Schlüssel zu der durch die Teilschlüssel erzeugten Signatur und die Nachricht wird dann von der Empfängereinheit E akzeptiert.

Als Verknüpfungen ⊗ kommen verschiedene zweckmäßigen Operationen in Frage. Beispielsweise sind auch Matrixverknüpfungen eingeschlossen. Dann ist beispielsweise die Reihenfolge der Signaturen wesentlich und kann im Allgemeinen nicht vertauscht werden. Alle privaten Teilschlüssel PR1,PR2,PRN sind ferner voneinander verschieden. Bevorzugt werden die Signaturen auf einem Hashwert der Nachricht gebildet. Dadurch wird das Datenvolumen von längeren Nachrichten vorteilhaft reduziert und der Prozess des verketteten Signierens kann schneller ablaufen.

Ein privater Schlüssel PR ergibt sich bevorzugt jedoch durch Multiplikation der privaten Teilschlüssel PR1,PR2,PRN in der Restlasse. Der öffentliche Schlüssel PU multipliziert mit dem sich ergebenen privaten Schlüssel PR ergibt in der Restklasse 1, wobei dadurch wieder der originale Hashwert oder die originale Nachricht erhalten wird. Dies ist eine bevorzugte und besonders schnelle Realisierung der Signatur. Der originale Hashwert bzw. die originale Nachricht kann dann von der Empfängereinheit E geprüft werden, beispielsweise indem mit der entsprechenden Hashfunktion aus der gevoteten Nachricht der Hashwert berechnet wird und mit dem übergebenen Hashwert nach Anwendung (Multiplikation) aller privaten Teilschlüssel verglichen wird.

Der private Schlüssel PR soll bevorzugt kommutativ aus den privaten Teilschlüsseln PR1,PR2,PRN berechenbar sein. Dann ist die Sequenz der verifizierenden Votermodule VM1,VM2,VMN irrelevant, solange zumindest alle Votermodule VM1,VM2,VMN beteiligt sind. Dies ist beispielsweise bei der oben beschriebenen Multiplikation der Fall.

Es kann zusätzlich noch eine Synchronisation stattfinden. Sinnvoll für einen zügigen zeitlichen Ablauf des Signierens ist es, wenn das Übergeben der gevoteten Nachricht des n-ten Votermoduls an das (n+1)-te Votermodul mit dem Übergeben der redundanten Nachrichten (O1,O2,OM) der Mehrzahl der Replikanten (R1,R2,RM) an das (n+1)-te Votermodul zeitlich abgestimmt wird, wobei 1≤n≤(N-1). Dadurch wird die zeitliche Verzögerung des verketteten Signierens verringert.

Jeder Voter V1,V2,VN ist bevorzugt von den anderen Votern V1,V2,VN separiert. Das meint, dass man hier die gleichen Techniken anwendet, wie man Replikanten R1,R2,RM segregiert, oder in anderen Worten kapselt bzw. isoliert. Dadurch wird die Unabhängigkeit der Berechnungspfade erreicht, wodurch das Risiko identischer Fehlerausgaben deutlich verringert wird. Eine geeignete Kapselung der Votermodule kann beispielsweise durch gefärbte Emulatoren für SIL3 oder SIL4 erzielt werden, wobei SIL das Sicherheits-Integritätslevel bezeichnet. Dies ist ferner von Vorteil, wenn man das Verfahren auf handelsüblichen PCs realisieren möchte.

Die Voter V1,V2,VN können als Diskriminatorvoter oder als Majoritätsvoter ausgeführt werden. Diskriminatorvoter geben eine gevotete Nachricht nur aus, falls alle Eingänge übereinstimmen. Majoritätsvoter bilden einen Mehrheitsentscheid, d.h. wenn eine Mehrheit der Nachrichten eine Übereinstimmung aufweist, dann wird diese Nachricht ausgegeben. Ein Voter V1,V2,VN gibt bevorzugt keine Nachricht oder eine Negativnachricht aus, falls er keine gevotete Nachricht bilden kann. Dies wäre zum Beispiel dann der Fall, wenn beispielsweise ein Majoritätsvoter genau zwei Nachrichten erhält, die sich jedoch widersprechen. Im Falle eines Diskriminatorvoters wäre das auch der Fall, wenn eine Eingangsnachricht von den Übrigen abweicht. Bevorzugt läuft das Übergeben der gevoteten Nachrichten vom n-ten Votermodul zum (n+1)-ten Votermodul ohne Unterbrechung ab, wobei 1≤n≤(N-1).

Vorteilhafterweise kann jede redundante Nachricht O1,O2,OM des jeweiligen Replikanten R1,R2,RM sicherungstechnisch identifiziert werden. Dies kann beispielsweise durch eine Checksumme mit Replikantenidentifikation erfolgen. Dadurch kann beispielsweise das Fehlverhalten eines Replikanten R1,R2,RM identifiziert werden.

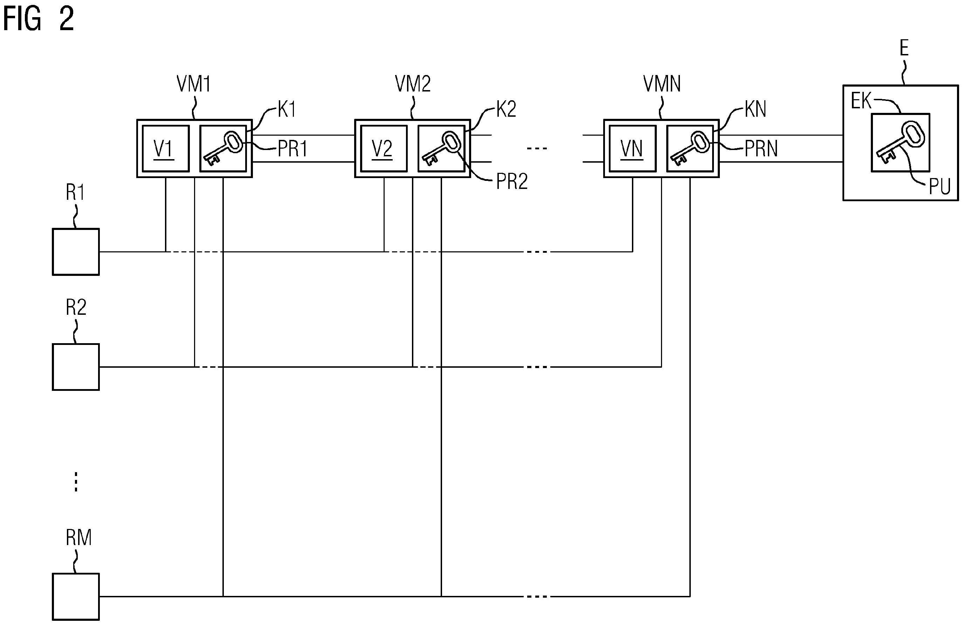

In der Figur 2 wird beispielhaft eine Vorrichtung zum Voting mit verketteten Signaturen schematisch dargestellt. Dabei wird eine Mehrzahl M von Replikanten R1,R2,RM zur Erzeugung von M redundanten Nachrichten mit M≥2 zur Verfügung gestellt. Zudem liegt eine Mehrzahl N von Votermodulen VM1,VM2,VMN mit N≥2 vor. Dabei ist jedes Votermodul VM1,VM2,VMN mit einem Voter V1,V2,VN zum Voting der redundanten Nachrichten O1,O2,OM der redundanten Replikanten R1,R2,RM sowie einer Kryptoeinheit K1,K2,KN mit einem privaten Teilschlüssel PR1,PR2,PRN zum Signieren einer Nachricht ausgestattet, wobei die Eingänge jedes Votermoduls VM1,VM2,VMN mit den Ausgängen jedes Replikanten R1,R2,RM verbunden sind. Der Ausgang jedes n-ten Votermoduls ist mit dem Eingang jedes (n+1)-ten Votermoduls zur Übertragung von gevoteten Nachrichten und Signaturen verbunden, wobei 1≤n≤(N-1), und es ist eine Empfängereinheit E vorgesehen, die die vom N-ten Votermodul VMN ausgegebene Signatur und gevotete Nachricht empfängt und die N-te Signatur mit einem öffentlichen Schlüssel PU prüft.

Zusammengefasst wird ein Verfahren zum Voting vorgeschlagen, das mit (asymmetrischen) kryptographischen Methoden kombiniert wird. Dabei werden verkettete Signaturen in mehreren Stufen verwendet. Voraussetzung ist dabei immer, dass ein Voting einer Stufe erfolgreich ist und mit dem Votingresultat der Vorstufe übereinstimmt. Ohne diese Voraussetzung wird keine Teilsignatur durch einen Teilschlüssel erfolgen. Nur wenn aber alle Teilsignaturen vorliegen, dann "passt" der öffentliche Schlüssel zu der durch die Teilschlüssel erzeugten Signatur und die Nachricht wird dann von der Empfängereinheit E akzeptiert. Durch das Konzept des verketteten Signierens wird eine hohe Sicherheit für die gevotete Nachricht erzeugt. Dadurch kann das Verfahren auf signaltechnisch nicht sicherer Hardware wie beispielsweise auf handelsüblichen PCs ausgeführt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- R1,R2,RM: Replikanten
- O1,O2,OM: redundante Nachrichten
- VM1,VM2,VMN: Votermodul
- K1,K2,KN: Kryptoeinheit
- PR1,PR2,PRN: privater Teilschlüssel
- PR: privater Schlüssel
- E: Empfangseinheit
- EK: Empfangskryptoeinheit
- PU: öffentlicher Schlüssel
- M1,M2,MN: gevotete Nachricht

## Patentansprüche

1. Verfahren zum Voting mit verketteten Signaturen umfassend die folgenden Schritte:
a) Bereitstellen einer Mehrzahl M von Replikanten (R1,R2,RM) zur Erzeugung von M redundanten Nachrichten (O1,O2,OM) mit M≥2;
b) Bereitstellen einer Mehrzahl N von Votermodulen (VM1,VM2,VMN) mit N≥2, wobei jedes Votermodul (VM1,VM2,VMN) einen Voter (V1,V2,VN) zum Voting der redundanten Nachrichten sowie eine Kryptoeinheit (K1,K2,KN) mit privatem Teilschlüssel (PR1,PR2,PRN) zum Signieren einer Nachricht aufweist;
c) Übergeben der redundanten Nachrichten (O1,O2,OM) der Replikanten (R1,R2,RM) an jedes Votermodul (VM1,VM2,VMN), so dass der Voter (V1,V2,VN) jedes Votermoduls (VM1,VM2,VMN) eine gevotete Nachricht (M1,M2,MN) auf Basis der redundanten Nachrichten (O1,O2,OM) erzeugt;
d) Erstellen einer 1-ten Signatur der 1-ten gevoteten Nachricht durch das 1-te Votermodul (VM1) mit einem 1-ten privaten Teilschlüssel (PR1), falls der 1-te Voter (V1) eine 1-te gevotete Nachricht erzeugt;
e) Übergeben einer n-ten Signatur und einer n-ten gevoteten Nachricht von dem n-ten Votermodul an das (n+1)-te Votermodul;
f) Vergleichen der von dem (n+1)-ten Voter gevoteten Nachricht mit der n-ten gevoteten Nachricht und Erstellen einer (n+1)-ten Signatur auf der n-ten Signatur mit einem (n+1)-ten privaten Teilschlüssel des (n+1)-ten Votermoduls, falls die 1-te gevotete Nachricht mit der (n+1)-ten gevoteten Nachricht übereinstimmt;
g) Durchführen der Schritte e) und f) in aufsteigender Reihenfolge für jedes n mit 1≤n≤(N-1);
h) Übergeben der N-ten Signatur und der N-ten gevoteten Nachricht an eine Empfängereinheit (E);
i) Akzeptieren der N-ten gevoteten Nachricht durch eine Empfängerkryptoeinheit (EK), falls die Empfängerkryptoeinheit (EK) die N-te Signatur mit einem öffentlichen Schlüssel (PU) erfolgreich prüft.

2. Verfahren nach Anspruch 1, wobei alle privaten Teilschlüssel (PR1,PR2,PRN) voneinander verschieden sind.

3. Verfahren nach einem der vorherigen Ansprüche, wobei die Signaturen auf einem Hashwert der Nachricht gebildet werden.

4. Verfahren nach einem der vorherigen Ansprüche, wobei sich ein privater Schlüssel (PR) durch Multiplikation der privaten Teilschlüssel (PR1,PR2,PRN) in der Restklasse ergibt und der öffentliche Schlüssel (PU) multipliziert mit dem sich ergebenen privaten Schlüssel (PR) in der Restklasse 1 ergibt, wobei dadurch wieder der originale Hashwert oder die originale Nachricht erhalten wird.

5. Verfahren nach einem der vorherigen Ansprüche, wobei ein privater Schlüssel (PR) kommutativ aus den privaten Teilschlüsseln (PR1,PR2,PRN) berechenbar ist.

6. Verfahren nach einem der vorherigen Ansprüche, wobei das Übergeben der gevoteten Nachricht des n-ten Votermoduls an das (n+1)-te Votermodul mit dem Übergeben der redundanten Nachrichten (O1,O2,OM) der Mehrzahl der Replikanten (R1,R2,RM) an das (n+1)-te Votermodul zeitlich abgestimmt wird, wobei 1≤n≤(N-1).

7. Verfahren nach einem der vorherigen Ansprüche, wobei jeder Voter (V1,V2,VN) von den anderen Votern (V1,V2,VN) separiert wird.

8. Verfahren nach einem der vorherigen Ansprüche, wobei die Voter (V1,V2,VN) als Diskriminatorvoter oder als Majoritätsvoter ausgeführt werden.

9. Verfahren nach einem der vorherigen Ansprüche, wobei ein jeder Voter (V1,V2,VN) keine Nachricht oder eine Negativnachricht erzeugt, falls er keine gevotete Nachricht bilden kann.

10. Verfahren nach einem der vorherigen Ansprüche, wobei das Übergeben der gevoteten Nachrichten vom n-ten Votermodul zum (n+1)-ten Votermodul ohne Unterbrechung abläuft, wobei 1≤n≤(N-1).

11. Verfahren nach einem der vorherigen Ansprüche, wobei bei jeder redundante Nachricht (O1,O2,ON) der jeweilige Replikant (R1,R2,RM) sicherungstechnisch identifiziert wird.

12. System zur Durchführung des Verfahrens zum Voting mit verketteten Signaturen gemäß eines der Ansprüche 1-11; wobei das System umfasst:
- eine Mehrzahl M von Replikanten (R1,R2,RM) zur Erzeugung von M redundanten Nachrichten mit M≥2;
- eine Mehrzahl N von Votermodulen (VM1,VM2,VMN) mit N≥2, wobei jedes Votermodul (VM1,VM2,VMN) einen Voter (V1,V2,VN) zum Voting der redundanten Nachrichten sowie einen privaten Teilschlüssel (PR1,PR2,PRN) zum Signieren einer Nachricht aufweist, wobei die Eingänge jedes Voters (V1,V2,VN) mit den Ausgängen jedes Replikanten (R1,R2,RM) verbunden sind;
- der Ausgang jedes n-ten Votermoduls ist mit dem Eingang jedes (n+1)-ten Votermoduls zur Übertragung von gevoteten Nachrichten und Signaturen verbunden, wobei 1≤n≤(N-1), und es ist eine Empfängereinheit (E) vorgesehen, die die vom N-ten Votermodul (VMN) ausgegebene Signatur und gevotete Nachricht empfängt und die N-te Signatur mit einem öffentlichen Schlüssel (PU) prüft.

13. Computerprogramm, umfassend Anweisungen, die, wenn das Programm von den Replikanten (R1, R2, RN), den Votermodulen (VM1, VM2, VMN) un der Empfängereinheit (E) des Systems nach unabhängigem Anspruch 12 ausgeführt wird, die Replikanten (R1, R2, RN), die Votermodule (VM1, VN2, VMN)und die Empfängereinheit (E) veranlassen, die Schritte eines Verfahrens zum Voting mit verketteten Signaturen nach einem der Ansprüche 1-11 durchzuführen.

14. Computerlesbares Speichermedium, umfassend Anweisungen, die, wenn sie von Replikanten (R1, R2, RN), der Votermodulen (VM1, VM2, VMN) und der Empfängereinheit (E) des Systems nach unabhängigem Anspruch 12 ausgeführt werden, die Replikanten (R1, R2, RN), die Votermodule (VM1, VM2, VMN) und die Empfängereinheit (E) veranlassen, die Schritte eines Verfahrens zum Voting mit verketteten Signaturen nach einem der Ansprüche 1-11 durchzuführen.

## Claims

1. Method for voting using concatenated signatures comprising the following steps:
a) providing a plurality M of replicants (R1, R2, RM) for generating M redundant messages (O1, O2, OM), where M≥2;
b) providing a plurality N of voter modules (VM1,VM2,VMN), where N≥2, wherein each voter module (VM1,VM2,VMN) has a voter (V1,V2,VN) for voting the redundant messages and a crypto unit (K1,K2,KN) with a partial private key (PR1,PR2,PRN) for signing a message;
c) transferring the redundant messages (O1,O2,OM) of the replicants (R1,R2,RM) to each voter module (VM1,VM2,VMN), so that the voter (V1,V2,VN) of each voter module (VM1,VM2,VMN) generates a voted message (M1, M2, MN) on the basis of the redundant messages (O1, O2, OM);
d) producing a 1st signature of the 1st voted message by means of the 1st voter module (VM1) with a 1st partial private key (PR1) if the 1st voter (V1) generates a 1st voted message;
e) transferring an n'th signature and an n'th voted message from the n'th voter module to the (n+1)'th voter module;
f) comparing the message voted by the (n+1)'th voter with the n'th voted message and producing a (n+1)'th signature on the n'th signature with a (n+1)'th partial private key of the (n+1)'th voter module if the 1st voted message matches the (n+1)'th voted message;
g) performing the steps e) and f) in ascending sequence for each n where 1≤n≤(N-1);
h) transferring the N'th signature and the N'th voted message to a receiver unit (E);
i) accepting the N'th voted message by a receiver crypto unit (EK) if the receiver crypto unit (EK) successfully verifies the N'th signature with a public key (PU).

2. Method according to claim 1, wherein all partial private keys (PR1, PR2, PRN) differ from one another.

3. Method according to one of the preceding claims, wherein the signatures are formed on a hash value of the message.

4. Method according to one of the preceding claims, wherein a private key (PR) is produced by multiplying the partial private keys (PR1,PR2,PRN) in the residue class and the public key (PU) is multiplied by the resulting private key (PR) in the residue class 1, wherein as a result the original hash value or the original message is obtained again.

5. Method according to one of the preceding claims, wherein a private key (PR) can be commutatively calculated from the partial private keys (PR1, PR2, PRN).

6. Method according to one of the preceding claims, wherein the transfer of the voted message of the n'th voter module to the (n+1)'th voter module is synchronized in time with the transfer of the redundant messages (O1,O2,OM) of the plurality of replicants (R1, R2, RM) to the (n+1)'th voter module, wherein 1≤n≤(N-1).

7. Method according to one of the preceding claims, wherein each voter (V1, V2, VN) is separated from the other voters (V1, V2, VN).

8. Method according to one of the preceding claims, wherein the voters (V1, V2, VN) are embodied as discriminator voters or as majority voters.

9. Method according to one of the preceding claims, wherein each voter (V1, V2, VN) does not generate a message or a negative message if it is not able to form a voted message.

10. Method according to one of the preceding claims, wherein the transfer of the voted messages from the n'th voter module to the (n+1)'th voter module proceeds without interruption, wherein 1≤n≤(N-1).

11. Method according to one of the preceding claims, wherein with each redundant message (O1, O2, ON) the respective replicant (R1, R2, RM) is identified in a safety-related manner.

12. System for performing the method for voting using concatenated signatures according to one of claims 1-11; wherein the system comprises:
- a plurality M of replicants (R1, R2, RM) for generating M redundant messages, where M≥2;
- a plurality N of voter modules (VM1, VM2, VMN), where N≥2, wherein each voter module (VM1, VM2, VMN) has a voter (V1, V2, VN) for voting the redundant messages and a partial private key (PR1, PR2, PRN) for signing a message, wherein the inputs of each voter (V1, V2, VN) are connected to the outputs of each replicant (R1, R2, RM);
- the output of each n'th voter module is connected to the input of each (n+1)'th voter module for transmitting voted messages and signatures, wherein 1≤n≤(N-1), and a receiver unit (E) is provided which receives the signature and voted message output by the N'th voter module (VMN) and verifies the N'th signature with a public key (PU).

13. Computer program, comprising instructions, which, when the program is executed by the replicants (R1, R2, R3), the voter modules (VM1, VM2, VMN) and the receiver unit (E) of the system according to independent claim 12, prompt the replicants (R1, R2, RM), the voter modules (VM1, VM2, VMN) and the receiver unit (E) to carry out the steps of a method for voting using concatenated signatures according to one of claims 1 - 11.

14. Computer-readable storage medium, comprising instructions, which, when they are executed by replicants (R1, R2, RM), the voter modules (VM1, VM2, VMN) and the receiver unit (E) of the system according to independent claim 12, prompt the replicants (R1, R2, RM), the voter modules (VM1, VM2, VMN) and the receiver unit (E) to carry out the steps of a method for voting using concatenated signatures according to one of claims 1 - 11.

## Revendications

1. Procédé de vote en utilisant des signatures concaténées, comprenant les stades suivants :
a) on se procure une pluralité de M réplicants (R1, R2, RM) de production de M messages (O1, O2, OM) redondants avec M≥2 ;
b) on se procure une pluralité de N modules (VM1, VM2, VMN) de votants avec N≥2, chaque module (VM1, VM2, VMN) de votants ayant un votant (V1, V2, VN) pour voter les messages redondants, ainsi qu'une unité (K1, K2, KN) de chiffrement à clé (PR1, PR2, PRN) partielle privée pour signer un message ;
c) on transmet le message (O1, O2, OM) redondant des réplicants (R1, R2, RM) à chaque module (VM1, VM2, VMN) de votant de manière à ce que le votant (V1, V2, VN) de chaque module (VM1, VM2, VMN) de votant produise un message (M1, M2, MN) voté sur la base des messages (O1, O2, OM) redondants ;
d) on établit une première signature du premier message voté par le premier module (VM1) de votant par une premier clé (PR1) partielle privée, si le premier votant (V1) produit un premier message voté ;
e) on transmet une énième signature et un énième message voté du énième module de votant au (n+1)ième module de votant ;
f) on compare le message voté par le (n+1)ème votant au énième message voté et on établit une (n+1)ème signature sur la énième signature par une (n+1)ème clé partielle privée du (n+1)ème module de votant, si le premier message voté coïncide avec le (n+1)ème message voté ;
g) on effectue les stades e) et f) en succession ascendante pour chaque n avec 1≤n≤(N-1) ;
h) on transmet la N-ème signature et le N-ème message voté à une unité (E) de récepteur ;
i) le N-ème message voté est accepté par une unité (EK) de chiffrement de récepteur, si l'unité (EK) de chiffrement de récepteur contrôle avec succès la N-ème signature avec une clé (PU) publique.

2. Procédé suivant la revendication 1, dans lequel toutes les clés (PR1, PR2, PRN) partielles privées sont différentes les unes des autres.

3. Procédé suivant l'une des revendications précédentes, dans lequel on forme les signatures sur une valeur de Hash du message.

4. Procédé suivant l'une des revendications précédentes, dans lequel une clé (PR) privée donne, par multiplication des clés (PR1, PR2, PRN) partielles privées, la classe résiduelle et la clé (PU) publique multipliée par la clé (PR) privée résultante donne la classe 1 résiduelle, en obtenant ainsi à nouveau la valeur original de Hash ou le message original.

5. Procédé suivant l'une des revendications précédentes, dans lequel une clé (PR) privée peut être calculée commutativement à partir des clés (PR1, PR2, PRN) partielles privées.

6. Procédé suivant l'une des revendications précédentes, dans lequel on accorde, dans le temps, la transmission du message voté du n-ème module de votant au (n+1)-ème module de votant à la transmission des messages (O1, O2, OM) redondants de la pluralité des réplicants (R1, R2, RM) au (n+1)-ème module de votant.

7. Procédé suivant l'une des revendications précédentes, dans lequel on sépare chaque votant (V1, V2, VN) des autres votants (V1, V2, VN).

8. Procédé suivant l'une des revendications précédentes, dans lequel on réalise les votants (V1, V2, VN) sous la forme de votants à discriminant ou de votants à majorité.

9. Procédé suivant l'une des revendications précédentes, dans lequel chaque votant (V1, V2, VN) ne produit pas de message ou produit un message négatif, s'il ne peut pas former de message voté.

10. Procédé suivant l'une des revendications précédentes, dans lequel la transmission des messages votés du n-ème module de votant du (n+1)-ème module de votant se déroule sans interruption, dans lequel 1≤n≤(N-1).

11. Procédé suivant l'une des revendications précédentes, dans lequel, pour chaque message (O1, O2, ON) redondant, on identifie, par une technique de sécurisation, le réplicant (R1, R2, RM) respectif.

12. Système pour effectuer le procédé de vote en utilisant des signatures concaténées suivant l'une des revendications 1 à 11, dans lequel le système comprend :
- une pluralité de M réplicants (R1, R2, RM) pour produire M messages redondants avec M≥2 ;
- une pluralité de N modules (VM1, VM2, VMN) de votants avec N≥2, chaque module (VM1, VM2, VMN) de votants ayant un votant (V1, V2, VN) pour voter les messages redondants, ainsi qu'une clé (PR1, PR2, PRN) partielle privée pour signer un message, dans lequel les entrées de chaque votant (V1, V2, VN) sont reliées aux sorties de chaque réplicant (R1, R2, RM) ;
- la sortie de chaque n-ème module de votant est reliée à l'entrée de chaque (n+1)-ème module de votant pour transmettre des messages votés et des signatures, dans lequel 1≤n≤(N-1), et il est prévu une unité (E) de récepteur, qui reçoit la signature émise par le N-ème module (VMN) de votant et le message voté et qui contrôle la N-ème signature par une clé (PU) publique.

13. Programme d'ordinateur comprenant des instructions qui, lorsque le programme est réalisé par les réplicants (R1, R2, RM), les modules (VM1, VM2, VMN) de votant et l'unité (E) de récepteur du système suivant la revendication 12 indépendante, fait que les réplicants (R1, R2, RM), les modules (VM1, VM2, VMN) de votant et l'unité (E) de récepteur effectuent les stades d'un procédé de vote utilisant des signatures concaténées suivant l'une des revendications 1 à 11.

14. Support de mémoire déchiffrable par ordinateur, comprenant des instructions qui, lorsqu'elles sont réalisées par les réplicants (R1, R2, RM), les modules (VM1, VM2, VMN) de votant et l'unité (E) de récepteur du système suivant la revendication 12 indépendante, font que les réplicants (R1, R2, RM), les modules (VM1, VM2, VMN) de votant et l'unité (E) de récepteur effectuent les stades d'un procédé de vote en utilisant des signatures concaténées suivant l'une des revendications 1 à 11.
